# EUROPEAN PATENT APPLICATION

(11) **EP 1 408 651 A2**
(43) Date of publication of application: **14.04.2004**
(21) Application number: 03020767.4
(22) Date of filing: 12.09.2003
(51) Int. Cl.: H04L 12/28, H04Q 7/20, H04Q 7/38, H04Q 11/04

(54) **Seamlessly networked end user device**

(30) Priority: 12.09.2002 US 409959 P
(71) Applicant: Broadcom Corporation, Irvine, California 92618-7013 (US)
(72) Inventor: Nicholas III, Henry T., Aliso Viejo California 92656 (US)
(74) Representative: Jehle, Volker Armin, Dipl.-Ing.

(57) **Abstract**

An end user device is provided that supports a connection to a plurality of data communication networks. The end user device detects which data communication networks are available, and selectively determines which of the plurality of data communication networks provides the most optimal communication channel. The end user device also provides for seamless transitions between different data communication networks, thus permitting all network communication tasks to be performed in a seamless, uninterrupted manner regardless of the location of the device, the type of network connection being used, or the form of data communication being carried out. The end user device further provides for simultaneous communication over a plurality of data communication networks utilizing a single network identity.

## Description

### BACKGROUND OF THE INVENTION

### Field of the Invention

The present invention is generally related to data communication networks. More specifically, the present invention is related to end user devices that are capable of interfacing with more than one data communication network.

### Background

A variety of data communication networks and protocols exist for transmitting data to and from an end user device. For example, conventional notebook or tablet personal computers (PCs) may communicate with a local area network (LAN) via a wired Ethernet connection or a wireless 802.11 x connection, or may communicate with a wide area network (WAN) via a V.90 connection or a wireless General Packet Radio Service (GPRS) connection. Such devices may also connect to one or more communication peripherals, such as to a Voice over Internet Protocol (VOIP) phone via a wired network with Ethernet switch, or to a headset or GPRS phone via a wireless Bluetooth™ connection.

Depending on where the end user is located and the type of network application being used, each of these connection types may provide distinct advantages or disadvantages. For example, if the end user is in a primary stationary location, such as the office, and the end user device is docked, then a wired Ethernet connection may provide the most efficient data communication. However, if the end user is in a mobile mode, then a wireless connection may be necessary.

In conventional devices, transitioning between one type of network connection to another typically requires user intervention to terminate one network connection to initiate another. This makes transitioning from a mobile mode to a stationary mode or vice versa more difficult for the user. Furthermore, in conventional mobile computing devices, the cessation of a network connection (either through user action such as undocking the station, through a loss of power such as expired battery or disconnect from power source, or loss of signal in a wireless environment) can result in lost data and require the user to reinitiate the network connection.

### BRIEF SUMMARY OF THE INVENTION

An end user device in accordance with embodiments of the present invention supports a connection to a plurality of data communication networks. The end user device detects which data communication networks are available, and selectively determines which of the plurality of data communication networks provides the most optimal communication channel. Whether a communication channel is optimal may be based on the type of data to be communicated (e.g., voice, video or computer data), the error rate associated with each available network, the number of anticipated "hops" between the end user device and the remote network entity to which it needs to communicate, the cost associated with establishing and maintaining a network link, the best path, and/or anticipated power consumption.

An end user device in accordance with embodiments of the present invention also provides for seamless transitions between different data communication networks, thus permitting all network communication tasks to be performed in a seamless, uninterrupted manner regardless of the location of the device, the type of network connection being used, or the form of data communication being carried out.

An end user device in accordance with embodiments of the present invention further provides for simultaneous communication over a plurality of data communication networks, thereby enabling enhanced error control capabilities, delivery of different data types (e.g., video, voice, and computer data) over separate channels to enhance efficiency and/or quality of data communication, increased communication speed through transmission of a data request over multiple data communication networks and acceptance of the fastest response, improved reliability through the automatic migration to a new data communication network when a first network connection fails, packet verification, guaranteed on-time packet delivery for applications that require a minimal Quality of Service (QOS), improved interactivity with a user base, and/or the ability to report problems occurring on a first data communication network over a second data communication network.

An end user device in accordance with an embodiment of the present invention also supports "in session" hand-offs between access points in a wireless data communication network.

An end user device in accordance with an embodiment of the present invention additionally utilizes a single network identity, such as a single log-in, Internet Protocol (IP) address, or telephone number, to simultaneously access a plurality of data communication networks.

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.

FIG. 1 is a high-level diagram of an end user device in accordance with an embodiment of the present invention.

FIG. 2 illustrates functions of an end user device in accordance with embodiments of the present invention during stationary and mobile modes of operation.

FIG. 3 depicts an example end user device in accordance with an embodiment of the present invention.

The present invention will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION OF THE INVENTION

### I. Overview

An end user device in accordance with an embodiment of the present invention provides a new and simpler user experience in mobile computing. In particular, the device enables new levels of end user productivity by performing all network communication tasks in a seamless, uninterrupted manner regardless of the location of the device, the type of network connection being used, or the form of data communication being carried out.

The end user device may comprise any device capable of communicating data to or from a data communication network in accordance with one or more wired and/or wireless communication protocols. Wired and wireless networks supported by an end user device in accordance with embodiments of the present invention may include: (1) cellular networks, including but not limited to AMPS and N-AMPS, CDMA, TDMA, GSM, iDEN, PCS 1900, PCD, and PHS; (2) public packet-radio networks, including but not limited to CDPD and CS-CDPD, DataTAC 4000, DataTAC 5000, Modacom, DataTAC 6000, DataTAC/IP, GPRS (GSM), Mobitex, Mobitex/IP, and PDC-P; (3) Internet connections, including but not limited to cable modem, DSL, and ISP; (4) Dial-up connections, including but not limited to DIAL/TCP, ISDN, PPP, and PSTN (POTS); (5) private packet networks, including but not limited to Dataradio and Motorola Private Data TAC; (6) satellite networks, including but not limited to Norcom; and (7) LAN connections, including but not limited to Ethernet, Token Ring and Wireless LAN.

For example, the end user device may comprise a notebook or tablet PC with or without a docking interface, that provides one or more of the following network connection capabilities: (1) connectivity to a wired Ethernet network, wireless LAN (WLAN) and/or wireless WAN (WWAN); (2) voice and/or video connectivity, including but not limited to VOIP connectivity and/or Session Initiation Protocol (SIP) connectivity; (3) connectivitywith wired and/orwireless phone hand/headsets; and (4) connectivity with secure networks and clients, including but not limited to virtual private networks (VPN) and Trusted Computing Platform Alliance (TCPA) networking and communication platforms.

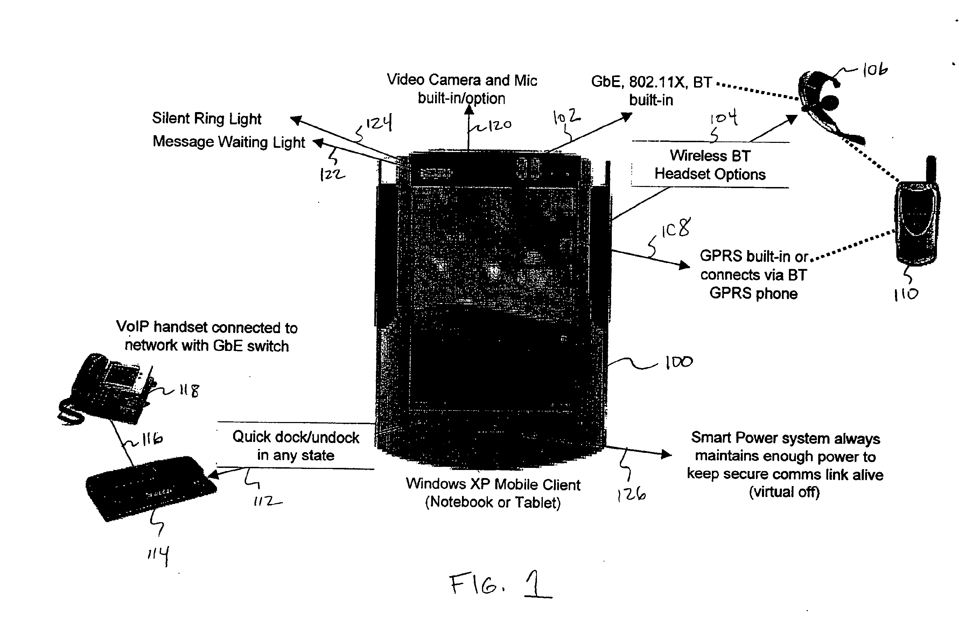

FIG. 1 depicts a high-level diagram of an exemplary end user device 100 in accordance with an embodiment of the present invention. As shown in FIG. 1, exemplary end user device 100 comprises a mobile client device, such as a notebook or tablet PC, operating under the Microsoft Windows^{TM} XP operating system.

As shown in FIG. 1, exemplary end user device 100 includes a number of built-in network interfaces 102 for communicating over one or more data communication networks in accordance with one or more associated communication protocols. These network interfaces 102 include a Gigabit Ethernet (GbE) interface, an 802.11x interface, and a Bluetooth^{TM} interface. End user device 100 also includes a Bluetooth^{TM} interface 104 (which may comprise one of the previously identified network interfaces 102 or may alternately comprise an additional interface) that supports the use of a wireless Bluetooth^{TM} headset 106 for placing and receiving VoIP phone calls and the like. End user device 100 further supports GPRS connectivity through the use of a built-in GPRS interface 108 or through a Bluetooth^{TM} connection to a GPRS phone 110.

Exemplary end user device 100 further comprises an interface 112 for connection to a docking station 114. Docking station 114 provides device 100 with a stationary connection to a network 116, such as a wired Ethernet LAN. As shown in FIG. 1, network 116 also connects end user device 100 to a VoIP phone 118 via a GbE switch for the routing and handling of VoIP calls received by end user device 100.

Exemplary end user device 100 further comprises: a silent ring light 124 that provides a visual indication to an end user of incoming message or VoIP call, a message waiting light 122 that provides a visual indication to an end user that they have received a voice and/or text message, and an optional built-in video camera and microphone 120 for enabling video teleconferencing and the like. While in a mobile (i.e., undocked) mode, power management for exemplary end user device 100 is provided via a "smart power" system 126 that ensures that at least enough power is provided to device 100 to ensure that all secure network communication links are kept active. This mode of operation may be referred to as a "virtual off' mode.

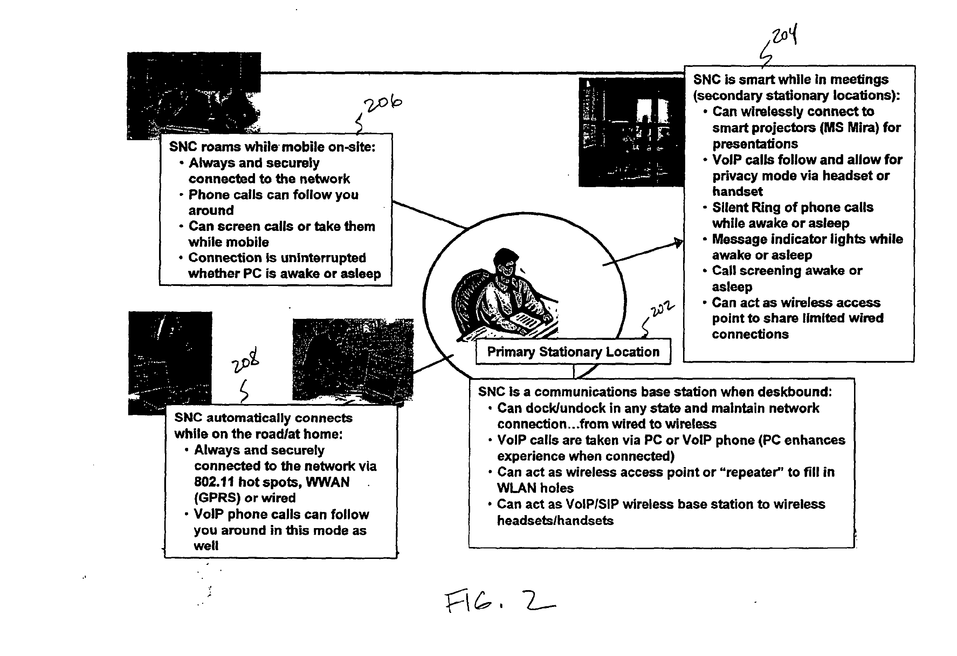

FIG. 2 illustrates functions of an end user device in accordance with embodiments of the present invention during various stationary and mobile modes of operation, including operation at primary and secondary stationary locations as well as mobile on-site and off-site operation.

As shown in FIG. 2, when docked at a primary stationary location 202, such as at an office desk, the end user device (which for purposes of FIG. 2 is denoted a "seamlessly networked client" or "SNC"), operates as a communications base station. In this mode of operation, the end user device can be docked and undocked in any state while still maintaining a network connection. Thus, for example, the end user device can transition from a wired to wireless state while maintaining an active network connection. While at the primary station location, the end user device can also accept VoIP calls or route them to a network-attached VoIP phone while providing additional features to enhance the VoIP call, act as a wireless access point or "repeater" to facilitate communication between other end user devices and a WLAN, and act as a VoIP or SIP wireless base station for wireless handsets or headsets.

As further shown in FIG. 2, when located at a secondary stationary location 204, such as an office conference room, an end user device in accordance with an embodiment of the present invention can wirelessly connect to smart projectors, such as those enabled by Microsoft Mira™-based technology, for presentations. While at the secondary stationary location, the end user device can continue to receive VoIP calls and allows for such calls to be received in a privacy mode via a headset or handset. Furthermore, while at the secondary stationary location, whether in an "awake" or "asleep" mode, the end user device provides a silent ring signal to alert an end user to incoming phone calls, a message indicator light to indicate that a voice or text message has been received, as well as call screening functionality. In addition, the end user device can act as a wireless access point at the secondary stationary location to share limited wired connections.

During mobile operation while roaming on-site 206, such as roaming in an office, the end user device continues to provide secure connections to the office network that are uninterrupted regardless of whether the device is in an "awake" or "asleep" mode. While in this mode, the end user device can continue to receive and screen VoIP calls.

During mobile operation while roaming off-site 208, such as while in transit or at home, the end user device continues to provide secure connections to the network via an 802.11x connection, a GPRS connection to a WWAN, or via a wired connection. During this mode, the end user device can continue to receive VoIP calls.

Usage modes of an end-user device in accordance with embodiments of the present invention may be divided into the following categories of operation: desk-bound at a primary office location, mobile while roaming within a campus network, mobile while roaming outside of the campus network, in a meeting room (secondary location), or at home (secondary location).

While desk-bound at a primary office location, an end user device in accordance with embodiments of the present invention provides one or more of the following functions: provides a connection to a LAN/WLAN; may be docked or undocked; provides continuous network connection while transitioning from a wired to wireless connection, or vice versa; provides continuous network connection during docking and undocking regardless of the state of the end user device or physical network transitions; andpermits extension of WLAN coverage by operating as an access point or a repeater in background mode. Furthermore, while desk-bound at a primary office location, an end user device in accordance with embodiments of the present invention provides one or more of the following phone and/or messaging-related functions: the end user device processes VoIP calls with "dumb" hand/headsets or routes the call to a VoIP phone, while providing additional functions that enhances the phone experience; call screening, voicemail forwarding, and/or unified mailbox functionality; enabling ofvideo and voice calls; and call relay to a wireless hand/headset to permit roaming in local hallways.

In a mobile mode while roaming within a campus network, an end user device in accordance with embodiments of the present invention provides one or more of the following functions: seamlessly transitions from a LAN connection to a WLAN connection; provides continuous network connection while roaming regardless of the power state of the end user device; and permits extension of WLAN coverage by operating as an access point or a repeater in background mode. Furthermore, while in a mobile mode roaming within a campus network, an end user device in accordance with embodiments of the present invention provides one or more of the following phone and/or messaging-related functions: reception of phone calls and video calls without latency regardless of the state of the end user device; call screening, voicemail forwarding, and/or unified mailbox functionality; enabling of video and voice calls; call relay to a wireless hand/headset to permit roaming in local hallways; generation of a silent ring indicator in all power states of the end user device; and generation of a message waiting indicator in all power states of the end user device.

In a mobile mode while operating outside a campus network, an end user device in accordance with embodiments of the present invention provides one or more of the following functions: seamlessly transitions from a WLAN connection to a WWAN connection; provides continuous network connection while transitioning from a WLAN connection to a WWAN connection, or vice versa; and ability to use a WWAN connection to permit extension of WLAN coverage by acting as an access point in background mode. Furthermore, while in a mobile mode operating outside a campus network, an end user device in accordance with embodiments of the present invention provides one or more of the following phone and/or messaging related functions: use of a WWAN connection as either a standard phone connection or as transport for VoIP packets; call screening, voicemail forwarding, and/or unified mailbox functionality as available in VoIP mode; and enabling of video and voice calls in either a standard phone connection mode or a VoIP mode.

In a secondary location such as a meeting room, an end user device in accordance with embodiments of the present invention provides one or more of the following functions: provides a connection to a LAN or WLAN; maintains a network connection that stays present when going from a wired to wireless connection, or vice versa; permits extension of WLAN coverage by operating as an access point or a repeater in background mode; and provides for a wireless connection to "smart projectors," such as those enabled by Microsoft Mira^{TM}-based technology, for conducting presentations. Furthermore, while operating in a secondary location such as a meeting room, an end user device in accordance with embodiments of the present invention provides one or more of the following phone and/or messaging related functions: call relay to a wireless hand/headset that connects to the end user device; enabling of video and voice calls; generation of a silent ring indicator in all power states of the end user device; and call screening, including call screening in a "meeting mode" in which a caller is notified of an end user's intent to pick up the call, thus providing the end user with time to move to privacy without interrupting a meeting.

In a secondary location such as at home, an end user device in accordance with embodiments of the present invention provides one or more of the following functions: provides a continuous network connection while transitioning from a WWAN to a home LAN or WLAN; provides continuous connectivity to office VPN; and the ability to take advantage of home network functions and capabilities, such as personal video recording (PVR), digital media networking, and the like. Furthermore, while operating in a secondary location such as the home, an end user device in accordance with embodiments of the present invention provides one or more of the following phone and/or messaging related functions: enabling of video and voice calls via both an office VoIP network and/or a home network; and ability to indicate which network originated a phone call (e.g., office or personal) via distinctive ring or display functionality.

### II. Architecture

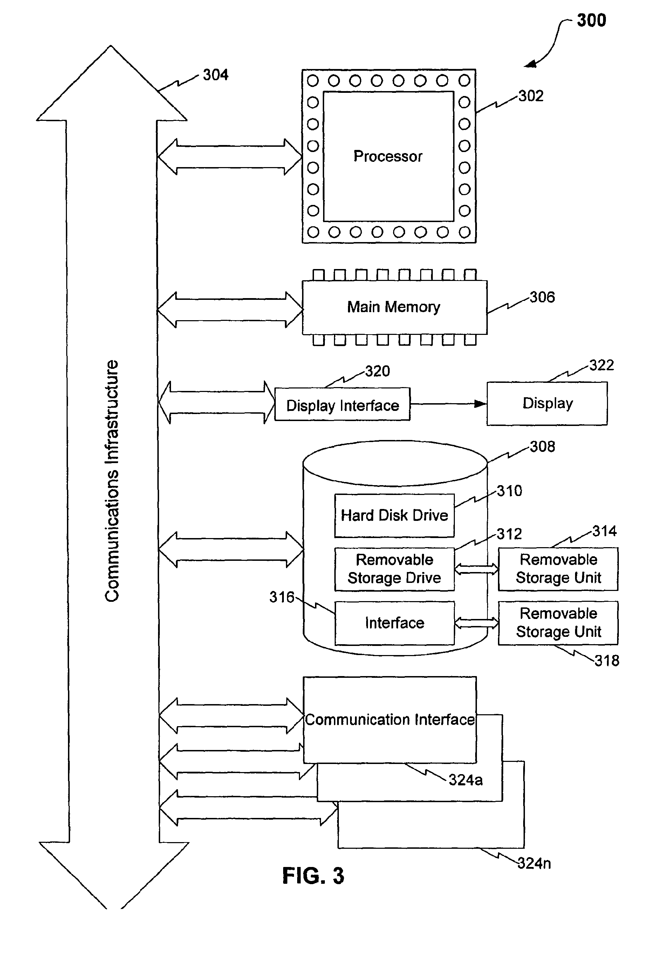

FIG. 3 depicts an example end user device 300 in accordance with an embodiment of the present invention. As shown in FIG. 3, the example end user device includes a processor 302 for executing software routines in accordance with embodiments of the present invention. Although a single processor is shown for the sake of clarity, the end user device 300 may also comprise a multiprocessor device. The processor 302 is connected to a communication infrastructure 304 for communication with other components of the end user device 300. The communication infrastructure 300 may comprise, for example, a communications bus, cross-bar, or network.

The end user device 300 further includes a main memory 306, such as a random access memory (RAM), and a secondary memory 308. The secondary memory 308 may include, for example, a hard disk drive 310 and/or a removable storage drive 312, which may comprise a floppy disk drive, a magnetic tape drive, an optical disk drive, or the like. The removable storage drive 312 reads from and/or writes to a removable storage unit 314 in a well known manner. Removable storage unit 314 may comprise a floppy disk, magnetic tape, optical disk, or the like, which is read by and written to by removable storage drive 312. As will be appreciated by persons skilled in the art, the removable storage unit 314 includes a computer usable storage medium having stored therein computer software and/or data.

In alternative embodiments, secondary memory 308 may include other similar means for allowing computer programs or other instructions to be loaded into the end user device 300. Such means can include, for example, a removable storage unit 318 and an interface 316 Examples of a removable storage unit 318 and interface 316 include a program cartridge and cartridge interface (such as that found in video game console devices), a removable memory chip (such as an EPROM, or PROM) and associated socket, and other removable storage units 318 and interfaces 316 which allow software and data to be transferred from the removable storage unit 318 to the end user device 300.

The end user device 300 further includes a display interface 320 that forwards graphics, text, and other data from the communication infrastructure 304 or from a frame buffer (not shown) for display to a user on a display unit 322.

The end user device 300 also includes a plurality of communication interfaces 324a-324n. The communication interfaces 324a-324n permit data, including but not limited to voice, video, and/or computer data to be transferred between the end user device 300 and external devices via a plurality of data communication networks. The communication interfaces 324a-324n may comprise, for example, a Gigabit Ethernet (GbE) interface, an 802.11x interface, and a Bluetooth^{TM} interface.

As used herein, the term "computer program product" may refer, in part, to removable storage unit 314, removable storage unit 318, a hard disk installed in hard disk drive 310, or a carrier wave carrying software over a communication path (wired or wireless) to any of communication interfaces 324a-324n. A computer useable medium can include magnetic media, optical media, or other recordable media, or media that transmits a carrier wave or other signal. These computer program products are means for providing software to the end user device 300.

Computer programs (also called computer control logic) may be stored in main memory 306 and/or secondary memory 308, as well as in a memory internal to processor 302 (not shown in FIG. 3). Computer programs can also be received via any of communications interfaces 324a-324n. In an embodiment, such computer programs, when executed, enable the end user device 300 to perform the features of the present invention as discussed herein. In particular, the computer programs, when executed, enable the processor 302 to perform features ofthe present invention. Accordingly, such computer programs represent controllers of the end user device 300.

In an alternate embodiment, the features of the present invention are implemented by one or more of the communication interfaces 324a-324n. In a still further embodiment, the features of the present invention are implemented by the processor 302, via the execution of computer programs, in combination with one or more of the communication interfaces 324a-324n.

### III. Network Detection

An end user device in accordance with an embodiment of the present invention performs a network detection function in order to determine which of the plurality of networks supported by the device, if any, are available for data communication.

The network detection function is preferably performed automatically by the end user device. For example, the network detection function may be performed automatically: (1) as part of the power-up sequence of the end user device to determine which network(s) are initially available to the end user device; (2) when the end user initiates a network-related task, such as sending an e-mail, initiating a VoIP phone call, or storing/retrieving a file to/from a remote database, to determine which network(s) are available for performing the task; (3) one or more times during an active network connection to determine if the current communication path is still satisfactory, and to determine if alternate, potentially more optimal, network connections are available; and/or (4) when a network connection is lost, in order to determine which network(s) are available for re-establishing data communication. In an embodiment, the network detection function may also be initiated by the end user to identify available network(s), for example, as part of a system diagnostic function.

An end user device in accordance with an embodiment of the present invention is preferably configured to cease performing network detection if an active network connection is determined to be optimal. By curtailing network detection when an optimal network connection has been achieved, embodiments of the present invention conserve the system resources necessary for performing network detection functions.

Various algorithms may be used to determine which of the plurality of networks supported by the end user device should be subject to network detection, and in which order each of these networks should be tested for availability. For example, the network detection function may search for available networks by first searching for the network that provides the fastest expected transfer rate, and if that network is unavailable, searching for the network that provides the second fastest expected transfer rate, and so on, in order to detect the fastest network connection possible. In an alternate embodiment, the network detection function may perform network availability testing based on the type of data that the end user device needs to communicate.

### IV. Network Selection

After the network detection function has been performed, an end user device in accordance with an embodiment of the present invention selects one of the one or more network(s) determined to be available for performing a data communication task. The end user device may select an available network for data communication based on one or more predefined criteria.

For example, an end user device in accordance with an embodiment of the present invention may select an available network based on the type of data that it needs to communicate.

An end user device in accordance with an embodiment of the present invention may select the available network based on the expected bit error rate or signal-to-noise ratio associated with each available network, wherein the end user device selects the network with the lowest expected bit error rate or signal-to-noise ratio. The bit error rate or signal-to-noise ratio of a particular network may be determined: (1) by the end user device itself, through the execution of a network-specific testing protocol; (2) by a remote network entity, such as a remote access point or host, which transmits the information to the end user device; (3) from a table stored in memory by the end user device that maps network connection types to expected error rates or signal-to-noise ratios, wherein each of the expected error rates or signal-to-noise ratios may be fixed, or ascertained, either at selected predetermined times or periodically, by either of methods (1) or (2) as previously described.

An end user device in accordance with an embodiment of the present invention may also select an available network based on the number of expected "hops," i.e., intervening network entities, between the end user device and the remote network entity to which it needs to communicate, wherein the end user device selects network connection that requires the fewest "hops."

An end user device in accordance with an embodiment of the present invention may select an available network based on the cost associated with establishing and maintaining a network link, wherein the end user device selects the least expensive network connection. For example, the end user device may avoid connections via cellular networks or ISPs that charge access fees when there are network connections available at a lower cost.

An end user device in accordance with an embodiment of the present invention may select an available network based on the "best path" available for data communication.

An end user device in accordance with an embodiment of the present invention may select an available network based on the anticipated power consumption for maintaining a network connection, wherein the end user device selects the network connection that will consume the least amount of power. This method is preferably used when the end user device is running on a limited power supply, such as a battery.

There may be an identity between network detection functions and the collection of information necessary to perform network selection. For example, an end user device in accordance with an embodiment of the invention may perform a test protocol to determine the bit error rate over a given network, where the failure to achieve a connection or the detection of a bit error rate that exceeds a predetermined threshold both signify unavailability of the network.

### V. Utilizing Multiple Networks

An end user device in accordance with an embodiment of the present invention supports simultaneous communication over a plurality of data communication networks. This functionality may be referred to as "parallel channel delivery."

For example, an end user device in accordance with an embodiment ofthe present invention supports simultaneous communication over a plurality of data communication networks to provide: (1) enhanced error control capabilities; (2) UDP on channel (Toss Packets) and error re-Sends; (3) delivery of different data types, such as video, voice, or data, over separate channels to enhance efficiency and/or quality of data communication; (4) increased communication speed through transmission of a data request over multiple data communication networks and acceptance of the fastest response; (5) improved reliability through the automatic migration from a first data communication network to a second data communication network when a connection to the first data communication network drops below a predetermined channel quality or is lost entirely; (6) verification of packets; (7) guaranteed on-time packet delivery for applications that require a minimal Quality of Service (QOS), such as VOIP applications or streaming video; (8) improved interactivity with a user base, such as the provision of field-upgradeable firmware; and/or (9) the ability to report problems, such as transmission errors, occurring on a first data communication network over a second data communication network.

An end user device in accordance with an embodiment of the present invention further supports "in session" hand-offs between access points in a wireless data communication network, such that a connection between the end user.device and the wireless data communication network is maintained even as the end user device leaves the communication range of a first wireless access point and enters the communication range of a second wireless access point. For example, an end user device in accordance with an embodiment of the present invention supports hand-offs between "hot spots" in an 802.11x wireless data communication network.

An end user device in accordance with an embodiment of the present invention utilizes a single network identity, such as a single log-in, Internet Protocol (IP) address, or telephone number, to simultaneously access a plurality of data communication networks. The use of a single network identity in this manner can simplify billing where access fees are accrued for the use of multiple networks.

### VI. Conclusion

While various embodiments of the present invention have been described above, it should be understood that they have been presented by way of example only, and not limitation. It will be understood by those skilled in the art that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

## Claims

1. A method for network communication in an end user device comprising a plurality of network interfaces for communicating over a corresponding plurality of networks, the method comprising:
detecting a plurality of available networks;
selecting an optimal network from said plurality of available networks;
initiating data communication with a remote device over said optimal network via a first one of the plurality of network interfaces; and
when said data communication over said optimal network is terminated, continuing said data communication without interruption over another of said plurality of available networks via a second one of the plurality of network interfaces.

2. The method of claim 1, wherein said detecting said plurality of available networks is performed as part of a power-up sequence of the end user device.

3. The method of claim 1, wherein said detecting said plurality of available networks is performed when a task related to network communication is initiated on the end user device.

4. The method of claim 1, wherein said detecting said plurality of available networks comprises searching for available networks in an order based on expected transfer rate.

5. The method of claim 1, wherein said detecting said plurality of available networks comprises searching for available networks based on a type of data to be communicated.

6. The method of claim 1, wherein selecting said optimal network comprises selecting said optimal network based on a type of data to be communicated.

7. The method of claim 1, wherein selecting said optimal network comprises selecting said optimal network based on an expected bit error rate for each of said plurality of available networks.

8. The method of claim 1, wherein selecting said optimal network comprises selecting said optimal network based on an expected signal-to-noise ratio for each of said plurality of available networks.

9. The method of claim 1, wherein selecting said optimal network comprises selecting said optimal network based on an expected number of intervening network entities between the end user device and said remote device for each of said plurality of available networks.

10. The method of claim 1, wherein selecting said optimal network comprises selecting said optimal network based on an expected cost associated with communicating over each of said plurality of available networks.

11. The method of claim 1, wherein selecting said optimal network comprises selecting said optimal network based on an anticipated power consumption associated with communicating over each of said plurality of available networks.

12. The method of claim 1, further comprising:
establishing a connection with said remote device over said another of said plurality of available networks via said second one of the plurality of network interfaces prior to said termination of said data communication over said optimal network.

13. An end user device, comprising:
a plurality of network interfaces for communicating over a corresponding plurality of networks; and
a processor coupled to said plurality of network interfaces, said processor configured to detect a plurality of available networks, to select an optimal network from said plurality of available networks, and to initiate data communication with a remote device over said optimal network via a first one of said plurality of network interfaces;
wherein said processor is further configured to continue said data communication without interruption over another of said plurality of available networks via a second one of said plurality of network interfaces when said data communication over said optimal network is terminated.

14. The end user device of claim 13, wherein at least one of said plurality of network interfaces comprises a wireless network interface.

15. The end user device of claim 13, wherein at least one of said plurality of network interfaces comprises a wired network interface.

16. The end user device of claim 13, wherein at least one of said plurality of network interfaces comprises a local area network interface.

17. The end user device of claim 13, wherein at least one of said plurality of network interface comprises a wide area network interface.

18. The end user device of claim 13, wherein said processor is configured to detect said plurality of available networks as part of a power-up sequence.

19. The end user device of claim 13, wherein said processor is configured to detect said plurality of available networks in response to initiation of a task related to network communication.

20. The end user device of claim 13, wherein said processor is configured to detect said plurality of available networks by searching for available networks in an order based on expected transfer rate.

21. The end user device of claim 13, wherein said processor is configured to detect said plurality of available networks by searching for available networks based on a type of data to be communicated.

22. The end user device of claim 13, wherein said processor is configured to select said optimal network based on a type of data to be communicated.

23. The end user device of claim 13, wherein said processor is configured to select said optimal network based on an expected bit error rate for each of said plurality of available networks.

24. The end user device of claim 13, wherein said processor is configured to select said optimal network based on an expected signal-to-noise ratio for each of said plurality of available networks.

25. The end user device of claim 13, wherein said processor is configured to select said optimal network based on an expected number of intervening network entities between the end user device and said remote device for each of said plurality of available networks.

26. The end user device of claim 13, wherein said processor is configured to select said optimal network based on an expected cost associated with communicating over each of said plurality of available networks.

27. The end user device of claim 13, wherein said processor is configured to select said optimal network based on an anticipated power consumption associated with communicating over each of said plurality of available networks.

28. The end user device of claim 13, wherein said processor is further configured to establish a connection with said remote device over said another of said plurality of available networks via said second one of said plurality of network interfaces prior to said termination of said data communication over said optimal network.

29. A computer program product comprising a computer useable medium having computer program logic recorded thereon for enabling a processor to perform network communication in an end user device comprising a plurality of network interfaces for communicating over a corresponding plurality of networks, said computer program logic comprising:
means for enabling the processor to detect a plurality of available networks;
means for enabling the processor to select an optimal network from said plurality of available networks;
means for enabling the processor to initiate data communication with a remote device over said optimal network via a first one of the plurality of network interfaces; and
means for enabling the processor to continue said data communication without interruption over another of said plurality of available networks via a second one of said plurality of network interfaces when said data communication over said optimal network is terminated.

30. The computer program product of claim 29, wherein said means for enabling the processor to detect said plurality of available networks is invoked as part of a power-up sequence of the end user device.

31. The computer program product of claim 29, wherein said means for enabling the processor to detect said plurality of available networks is invoked when a task related to network communication is initiated on the end user device.

32. The computer program product of claim 29, wherein said means for enabling the processor to detect said plurality of available networks comprises means for enabling the processor to search for available networks in an order based on expected transfer rate.

33. The computer program product of claim 29, wherein said means for enabling the processor to detect said plurality of available networks comprises means for enabling the processor to search for available networks based on a type of data to be communicated.

34. The computer program product of claim 29, wherein said means for enabling the processor to select said optimal network comprises means for enabling the processor to select said optimal network based on a type of data to be communicated.

35. The computer program product of claim 29, wherein said means for enabling the processor to select said optimal network comprises means for enabling the processor to select said optimal network based on an expected bit error rate for each of said plurality of available networks.

36. The computer program product of claim 29, wherein said means for enabling the processor to select said optimal network comprises means for enabling the processor to select said optimal network based on an expected signal-to-noise ratio for each of said plurality of available networks.

37. The computer program product of claim 29, wherein said means for enabling the processor to select said optimal network comprises means for enabling the processor to select said optimal network based on an expected number of intervening network entities between the end user device and said remote device for each of said plurality of available networks.

38. The computer program product of claim 29, wherein said means for enabling the processor to select said optimal network comprises means for enabling the processor to select said optimal network based on an expected cost associated with communicating over each of said plurality of available networks.

39. The computer program product of claim 29, wherein said means for enabling the processor to select said optimal network comprises means for enabling the processor to select said optimal network based on an anticipated power consumption associated with communicating over each of said plurality of available networks.

40. The computer program product of claim 29, further comprising:
means for enabling the processor to establish a connection with said remote device over said another of said plurality of available networks via said second one of the plurality of network interfaces prior to said termination of said data communication over said optimal network.
